# EUROPÄISCHE PATENTSCHRIFT

(11) **EP 2 238 356 B1**
(45) Veröffentlichungstag und Bekanntmachung des Hinweises auf die Patenterteilung: **05.03.2014**
(21) Anmeldenummer: 09707876.0
(22) Anmeldetag: 14.01.2009
(51) Int. Cl.: F16B 5/07

(54) **BEFESTIGUNGSSYSTEM**
MOUNTING SYSTEM
SYSTÈME DE FIXATION

(30) Priorität: 06.02.2008 DE 102008007913
(43) Veröffentlichungstag der Anmeldung: 13.10.2010
(73) Patentinhaber: Gottlieb Binder GmbH & Co. KG, 71088 Holzgerlingen (DE)
(72) Erfinder: POULAKIS, Konstantinos, 71157 Hildrizhausen (DE)
(74) Vertreter: Bartels, Martin Erich Arthur
(86) Internationale Anmeldenummer: PCT/EP2009/000164
(87) Internationale Veröffentlichungsnummer: WO 2009/097950

(56) Entgegenhaltungen:
- DE-U1- 9 412 451
- US-A1- 2003 010 799

## Beschreibung

Die Erfindung betrifft ein Befestigungssystem zum wieder lösbaren Anbringen von Abdeckbauteilen, wie Paneelen an Drittbauteilen, wie Karosseriebauteilen, mit mindestens einem Distanzhalter, der an seiner einen Seite mittels eines ersten Befestigungsmittels an dem Abdeckbauteil festlegbar ist und der auf seiner gegenüberliegenden Seite mit einem Haftverschlußteil mit Verschlußelementen versehen ist, das mit einem korrespondierenden Haftverschlußteil mit Verschlußelementen wieder lösbar in Eingriff bringbar ist, das auf seiner den Verschlußelementen abgewandten Seite mittels eines weiteren Befestigungsmittels an dem Drittbauteil festlegbar ist, wobei der Distanzhalter aus einem Rahmenteil besteht, dessen Bauhöhe zum Ausgleich von unterschiedlichen Einbaumaßen an den miteinander zu verbindenden Bauteilen vorgebbar ist, und wobei das Rahmenteil eine rechteckförmige Kastenform hat mit einer Rahmenvertiefung.

Ein derartiges Befestigungssystem ist aus DE 94 12 451 U1 bekannt geworden. Das bekannte Befestigungssystem umfaßt zwei in gegenseitigen Eingriff bringbare Befestigungsteile, wobei jedes Befestigungsteil mit einer Struktur zur korrekten Positionierung des einen Befestigungsteils relativ zu dem anderen Befestigungsteil versehen ist. Die Befestigungsteile können mittels einer an der Rückseite der Basis angebrachten Klebeschicht oder durch eine andere geeignete mechanische oder chemische Einrichtung an einem Gegenstand befestigt werden. Ein erstes und ein zweites Befestigungsteil weisen jeweils eine im Wesentlichen ebene Basis und mehrere mit Köpfen versehene, im Wesentlichen stiftförmige Verankerungselemente auf, die einander benachbart sind und von der Basis abstehen. Das erste Befestigungsteil weist eine aufragende umlaufende Wand auf, die im Wesentlichen senkrecht um den gesamten Umfangsreich der Basis verläuft. Das zweite Befestigungsteil weist entsprechend eine aufragende umlaufende Wand auf. Bei dieser Anordnung können das erste Befestigungsteil und das zweite Befestigungsteil in einer vorbestimmten positionsgemäßen Beziehung aneinander befestigt werden, wobei Toleranzen bestehen, die durch die Kontakte der Innenfläche der im Zusammengriffszustand der Befestigungsteile innen liegenden Wand mit der Außenfläche der im Zusammengriffszustand der Befestigungsteile außen liegenden Wand begrenzt sind.

Dahingehende Befestigungssysteme dienen unter anderem dazu, flächenartige Verkleidungen an vorgebbaren Stellen festzulegen, beispielsweise um unschön aussehende Stellen zu kaschieren; sie können aber auch zur Wärme- und Schallisolation eingesetzt werden. So werden im Kraftfahrzeugbau beispielsweise paneelartige Abdeckbauteile eingesetzt, um Blechteile als Karosseriebauteile großflächig abzudecken. Als Karosseriebauteile können hier beispielsweise Beladetüren angesprochen sein, aber auch Karosserieböden und -decken. Neben dem angesprochenen Kraftfahrzeugbereich sind solche Befestigungssysteme auch einsetzbar bei Eisenbahnen, Schiffen und Flugzeugen, wo vergleichbare Aufgabenstellungen zu lösen sind.

Dadurch, dass das Befestigungssystem eine wieder lösbare Verbindung zwischen Abdeckbauteil und einem Drittbauteil ermöglicht, lassen sich beispielsweise innerhalb des Drittbauteils verlaufende technische Einrichtungen, wie Kabel, Klimakanäle, Steuerelektroniken etc., bei Bedarf gut zugänglich gestalten, indem man eben das Abdeckbauteil von dem Drittbauteil mit der jeweils technischen Einrichtung entfernt. Im Stand der Technik sind hier insbesondere bisher als jeweiliges Befestigungssystem Nägel, Nieten, Schrauben, Klipse etc. zum Einsatz gekommen, die einen entsprechend hohen Demontageaufwand notwendig werden lassen, was ebenso für den Fall gilt, dass das Abdeckbauteil mittels eines Klebstoffes fest am jeweiligen Drittbauteil angeordnet ist.

Ausgehend von diesem Stand der Technik liegt der Erfindung die Aufgabe zugrunde, die bekannten Befestigungssysteme dahingehend weiter zu verbessern, dass sich mit geringem Montageaufwand zum einen die Verbindung zwischen Abdeckbauteil und Drittbauteil herstellen und ebenso wieder lösen läßt, und zwar funktionssicher und innerhalb kürzester Zeit. Eine dahingehende Aufgabe löst ein Befestigungssystem mit den Merkmalen des Patentanspruches 1 in seiner Gesamtheit.

Bei dem erfindungsgemäßen Befestigungssystem weist das eine Haftverschlußteil eine die Verschlußelemente aufweisende Trägerlage auf, die bündig in die Rahmenvertiefung des Distanzhalters aufnehmbar und dort unverlierbar mittels eines Klebstoffes festlegbar ist. Der Distanzhalter weist vorzugsweise eine quadratische Querschnittsform auf. Gegenstand der Erfindung ist weiter ein Abdeckbauteil gemäß Patentanspruch 7.

Bei dem erfindungsgemäßen Befestigungssystem hat das Rahmenteil eine rechteckförmige Kastenform mit einer Rahmenvertiefung zur bündigen Aufnahme einer Trägerlage mit den Verschlußelementen des einen Haftverschlußteils, was zu einer besonders druckstabilen Ausführungsform führt. Kommt es auf besonders leichtes Einbaugewicht an, kann das Rahmenteil auch in der Art eines Hohlprofils ausgebildet sein, das dann über innere und/oder äußere Stegwände ausgesteift ist. Sofern die einzelnen Distanzhalter in Funktionsgruppen unterteilt und zur dahingehenden Kenntlichmachung eingefärbt sind, läßt sich vor Ort eine besonders einfache Montage von Abdeckbauteilen an den Drittbauteilen erreichen.

Weitere vorteilhafte Ausführungsformen sind Gegenstand der weiteren Unteransprüche.

Das Befestigungssystem ist aus mindestens einem fertigen Verbund gebildet, bestehend aus einem Distanzhalter, miteinander in Eingriff befindlicher Verschlußelemente sowie mit entsprechenden Befestigungsmitteln, vorzugsweise in Form mindestens eines geeigneten Klebstoffs. Der dahingehende Verbund wird mit dem Abdeckbauteil in der Art einer Paneele oder sonstigen Flächenverkleidung fest verbunden und dann klebend am Drittbauteil an der vorgesehenen Stelle festgelegt. Ist der derart klebende Verbund erst einmal definiert hergestellt, läßt sich dann das Abdeckbauteil vom Drittbauteil lösen, indem die Verschlußelemente am Distanzhalter außer Eingriff gebracht werden mit den aufgeklebten Verschlußelementen am Drittbauteil. Ist das Paneel entfernt, lassen sich im Drittbauteil vorhandene technische Einrichtungen im skizzierten Rahmen warten oder austauschen und im übrigen dient das am Drittbauteil festgelegte Paneel auch als Wärme- und Schallschutz gebendes Mittel.

Wird das Abdeckbauteil im Rahmen von Karosseriebauteilen eingesetzt, lassen sich dergestalt auch für den Betrachter unschön wirkende Blechbauteile entsprechend kaschieren. Kommt das jeweilige Abdeckbauteil beispielsweise im Laderaum eines Lastkraftwagens oder Transportbusses zum Einsatz und wird die jeweilige Abdeckung beispielsweise durch das Ladegut mechanisch beschädigt, besteht dergestalt in einfacher Weise über das Befestigungssystem eine Austauschmöglichkeit gegen ein Neubauteil. Das zusammen mit dem Abdeckbauteil in einem ersten Montageschritt aufzusetzende Befestigungssystem kann auch im sonstigen Transportbereich (Flugzeuge, Schiffe, Autofähren, Reiseomnibusse etc.) eingesetzt werden; Anwendungsmöglichkeiten bestehen aber auch im architektonischen Gestaltungsbereich, beispielsweise beim Anbringen von Wandverkleidungen auf Stahlbauteilen von Gebäuden.

Bei dem Befestigungssystem ist vorgesehen, dass der Distanzhalter aus einem Rahmenteil besteht, dessen Bauhöhe zum Ausgleich von unterschiedlichen Einbaumaßen an den miteinander zu verbindenden Bauteilen vorgebbar ist. Auf diese Art und Weise läßt sich, ohne eine Änderung am Drittbauteil oder am jeweiligen Abdeckbauteil vornehmen zu müssen, eine sinnfällige wieder lösbare Verbindung herstellen, auch wenn gegebenenfalls beispielsweise durch gesickte Blechteile im Karosseriebauteil, die Anbringhöhen für das Abdeckbauteil variieren können.

Im folgenden wird das erfindungsgemäße Befestigungssystem anhand eines Ausführungsbeispiels näher erläutert. Dabei zeigen in prinzipieller und nicht maßstäblicher Darstellung die
- Fig.1: die stirnseitige Ansicht auf eine Beladetür eines Transportbusses;
- Fig.2: eine stirnseitige Ansicht auf ein Abdeckbauteil, das mittels des Befestigungssystems an der Ladetür nach der Fig. 1 zu befestigen ist;
- Fig.3: in der Art einer Explosionszeichnung die wesentlichen Teile einer Ausführungsform des Befestigungssystems;
- Fig.4: eine gegenüber der Fig.3 geänderte Ausführungsform eines Teils des Befestigungssystems;
- Fig.5: eine Seitenansicht auf einen Teil des Abdeckbauteils nach der Fig.2;
- Fig.6: das Gewebebild eines für das Befestigungssystem eingesetzten Haftverschlußteils in Draufsicht und
- Fig.7: eine Seitendarstellung auf das flächige Haftverschlußteil nach der Fig.6.

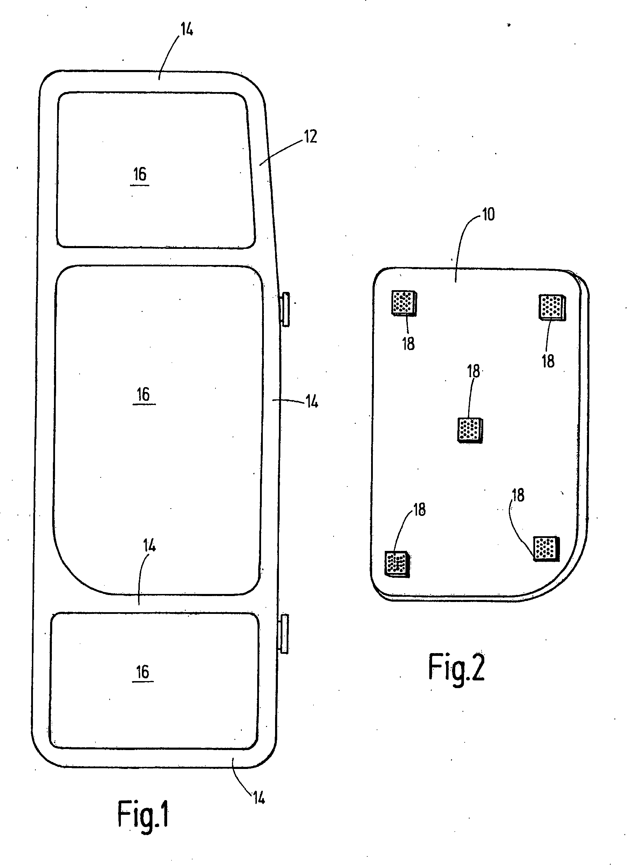

Das Befestigungssystem soll nun anhand des Ausführungsbeispiels nach den Fig.1 und 2 näher erläutert werden. Das Befestigungssystem dient dem wieder lösbaren Anbringen von Abdeckbauteilen 10, wie beispielsweise mehrlagigen Holzpaneelen an Drittbauteilen 12, wie Karosseriebauteilen, beispielsweise in Form der in Fig.1 gezeigten Beladetür eines Transportbusses. Die dahingehende Tür besteht überwiegend aus Blechbauteilen, wobei einzelne Blechprofile 14 der Tür durch vertiefte Flächenausnehmungen 16 voneinander separiert sind. Die mittlere Ausnehmung 16 dient der Aufnahme des in Fig.2 gezeigten Abdeckbauteils 10, indem dieses um eine fiktive Längsachse geklappt so auf das Drittbauteil 12 gelegt wird, dass die in Fig.2 aufgezeigten Befestigungsteile 18 nicht mehr sichtbar sind, sondern vielmehr die rückwärtige, durchgehende Fläche des Abdeckbauteils 10.

Anstelle der in der Fig.2 gezeigten fünf Befestigungsteile 18 können selbstredend in Abhängigkeit von der Ausgestaltung des jeweiligen Abdeckbauteils 10 auch mehr oder weniger Befestigungsteile 18 zum Einsatz kommen. Vergleichbar zu den Flächenausnehmungen 16 zugeschnittene Abdeckbauteile 10 mit Befestigungsteilen 18 können vergleichbar in die obere und untere Ausnehmung 16 der Blechtür eingesetzt werden, was der Einfachheit halber jedoch nicht dargestellt ist.

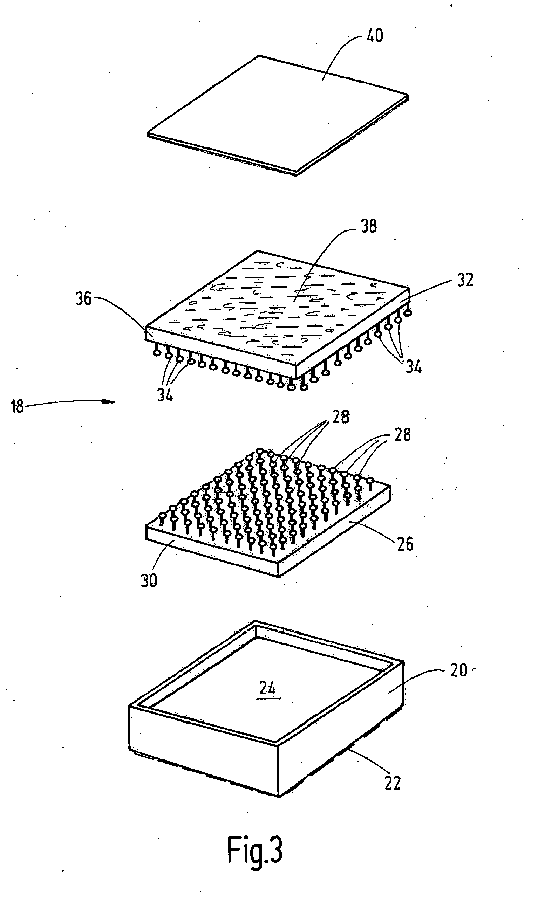

Die Fig.3 zeigt ein Befestigungsteil 18 als Ganzes. Das Befestigungsteil 18 ist in der Art eines Verbundes aus Einzelkomponenten aufgebaut, beginnend mit einem Distanzhalter 20, der in Blickrichtung auf die Fig.3 gesehen auf seiner Unterseite ein erstes Befestigungsmittel 22, vorzugsweise in Form eines Klebstoffs, aufweist. Der genannte Klebstoff kann unmittelbar auf den Distanzhalter 20 bereits aufgebracht sein; vorzugsweise wird jedoch erst vor Ort, also beim Anbringen des Befestigungssystems an dem Abdeckbauteil 10, das erste Befestigungsmittel 22 in Form des Klebstoffs aufgebracht.

Der Distanzhalter 20 ist vorzugsweise in der Art eines Spritzgußteils ausgebildet und besteht beispielsweise aus Polyamid 6 Material. Der Distanzhalter 20 kann aber auch aus einem anderen Kunststoffmaterial gebildet sein. Für das Befestigungsmittel 22 kommen bevorzugt reaktive Klebstoffe, wie feuchtigkeitsvernetzende Polyurethan-Klebstoffe, zum Einsatz. Dahingehende Klebstoffe sind hochtemperaturbeständig, was eine Rolle spielt, wenn das Befestigungssystem für Karosseriebauteile verbaut wird, die beispielsweise im Sommer höheren Temperaturen, beispielsweise durch direkte Sonneneinstrahlung, ausgesetzt sind. Insoweit können auch hochtemperaturbeständige Hotmelt-Klebstoffe zum Einsatz kommen, wie Polyamid-Klebstoffe. Besonders bevorzugt ist der Distanzhalter 20 aus ABS-Werkstoff aufgebaut, insbesondere aus PC-ABS-Werkstoff (Polycarbonat-Acryl-Nitril-Butadien-Styrol-Werkstoff).

Der Distanzhalter 20 hat eine rechteckförmige Kastenform mit einer Rahmenvertiefung 24 zur bündigen Aufnahme einer Trägerlage 26 mit den pilzkopfartigen Verschlußelementen 28 des einen Haftverschlußteils 30. Von der Baugröße her korrespondierend ist darüber angeordnet innerhalb des Verbundes ein zweites Haftverschlußteil 32 vorhanden, das in Blickrichtung auf die Fig.3 gesehen auf seiner Unterseite gleichfalls pilzkopfartige Verschlußelemente 34 trägt, die entsprechend den Verschlußelementen 28 ausgebildet sind. Mithin können die Pilzköpfe 34 des einen Haftverschlußteils 32 in die von den Pilzköpfen 28 des anderen Haftverschlußteils 30 gebildeten Abstände in wieder lösbarer Weise zum Herstellen eines Haftverschlusses als Ganzes eingreifen. Die jeweiligen Pilzköpfe der genannten Verschlußelemente sind über Stengel oder Stiele mit der jeweiligen Trägerlage verbunden, wobei die Trägerlage des zweiten Haftverschlußteils 32 mit 36 bezeichnet ist. Anstelle der Pilzköpfe 34 für das eine Haftverschlußteil 32 kann auch ein nicht näher dargestelltes Flauschmaterial treten, das dann entsprechend mit den Pilzen 28 des Haftverschlußteils 30 im festgelegten Zustand verhakt. Ferner können die dahingehenden Pilzköpfe 28 auch in der Art eines Hakenverschlusses ausgebildet sein und ferner kann man die Verschlußelemente auch tauschen, beispielsweise dergestalt, dass der Flausch am Haftverschlußteil 30 angeordnet ist und die Pilze am Verschlußteil 32. Des weiteren besteht die Möglichkeit, männliche Verschlußelemente, wie Haken, Pilze etc., mit weiblichen Verschlußelementen, wie Schlaufen, auf einer Seite eines Verschlußelementes 30,32 anzuordnen.

Auf der Rückseite des zweiten Haftverschlußteils 32 ist ein zweites Befestigungsmittel 38 vorhanden, vorzugsweise wiederum in Form eines Klebstoffes. Hierbei besonders bevorzugt zum Einsatz kommender Klebstoff ist ein drucksensitiver Klebstoff auf Acrylatbasis oder ein sog. Kunstkautschuk-Klebstoff. Vorzugsweise sind auch hier die eingesetzten Klebstoffe temperaturbeständig. Zum Schutz der in Blickrichtung auf die Fig.3 gesehen oberen Klebstoffschicht 38 ist eine abziehbare Schutzfolie 40 vorhanden, vorzugsweise in Form einer Polyethylenfolie.

Der Verbund von Distanzhalter 20 mit den beiden Haftverschlußteilen 30 und 32 zusammen mit der Schutzfolie 40 bilden ein Befestigungsteil 18 nach der Fig.2 aus und der dahingehende Verbund an Befestigungsteilen 18 ist mittels des ersten Befestigungsmittels 22 an der Unterseite des Distanzhalters 20 mit der in Blickrichtung auf die Fig.2 gesehen Oberseite des Abdeckbauteils 10 an der jeweils vorgebbaren Stelle fest verbunden, insbesondere fest verklebt. Entfernt man nun die Schutzfolie 40 von dem dahingehenden jeweiligen Verbund, läßt sich das Abdeckbauteil 10 mit seinen gezeigten fünf Befestigungsteilen 18 in Längsrichtung um 180° geklappt mittels des Klebstoffes 38 an der Innenseite der Tür in der mittleren Flächenausnehmung 16 definiert festlegen.

Will man nun das Abdeckbauteil 10 vom Drittbauteil 12 lösen, zieht man das Abdeckbauteil 10 entsprechend von der Flächenausnehmung 16 ab, wobei dann das erste Befestigungsmittel 22, der Distanzhalter 20 und das erste Haftverschlußteil 30 an dem Abdeckbauteil 10 verbleiben, wohingegen das korrespondierende Haftverschlußteil 32 über das zweite Befestigungsmittel 38 in Form des Klebstoffes in der mittleren Flächenausnehmung 16 des Drittbauteils 12 in Form der Beladetür stationär verbleibt. Bei abgenommenem Abdeckbauteil 10 können dann entsprechende Wartungsarbeiten an der Tür vorgenommen werden oder es läßt sich ein beschädigtes Abdeckbauteil 10 in entsprechender Weise mit den korrespondierenden Teilen 20,22,30 des Befestigungssystems ausgerüstet erneut an den verbleibenden Teilen 32,38 des Befestigungssystems innerhalb des Drittbauteils 12 an vorgegebener Stelle festlegen. Im übrigen ist das erste Haftverschlußteil 30 unverlierbar mittels eines nicht näher dargestellten Klebstoffes. in der Rahmenvertiefung 24 des Distanzhalters 20 festgelegt, der vorzugsweise eine quadratische Querschnittsform aufweist.

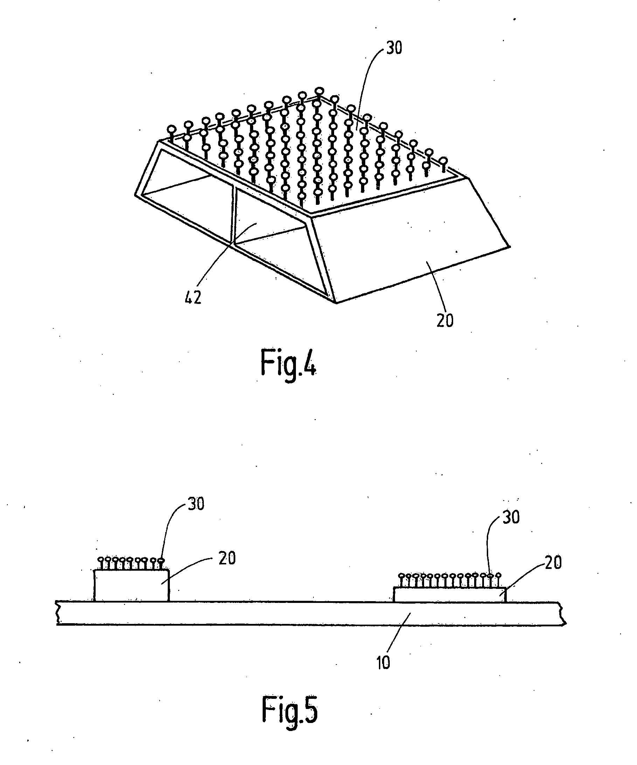

Wie insbesondere die Fig.5 zeigt, läßt sich der jeweilige Distanzhalter 20 in der Bauhöhe unterschiedlich ausgestalten, um dergestalt ungleiche Einbaumaße, beispielsweise innerhalb des Drittbauteils 12, ausgleichen zu können. Um eine vereinfachte Montage vor Ort sicherstellen zu können, können unterschiedliche Funktionsgruppen des Distanzhalters 20, beispielsweise solche Distanzhalter 20 mit unterschiedlicher Bauhöhe, derart eingefärbt sein, dass eine Bauart beispielsweise mit der größeren Höhe blau eingefärbt ist und die in Blickrichtung auf die Fig.5 gesehen kleiner aufbauende Rahmenkonstruktion für einen Distanzhalter 20 dann eine andere Farbe, beispielsweise grün, aufweist. Andere Arten an Funktionsgruppen-Gestaltungen und -Unterteilungen sind hier denkbar.

Bei der Ausführungsform nach der Fig.4 ist der dort gezeigte modifizierte Distanzhalter 20 als Hohlprofil konzipiert, was hilft, Einbaugewicht zu sparen. Die dahingehende Hohlprofilkonstruktion ist beim Ausführungsbeispiel nach der Fig.4 über eine mittlere Stegwand 42 ausgesteift. Auch läßt sich über die gezeigte Hohlprofilkonstruktion ein weiter Rahmen an Gestaltungsmöglichkeiten abdecken. Beispielsweise könnte als Profilkonstruktion auch ein gesch lossener ringförmige Profilrahmen (nicht dargestellt) od. dgl. je nach Einsatzzweck gewählt werden.

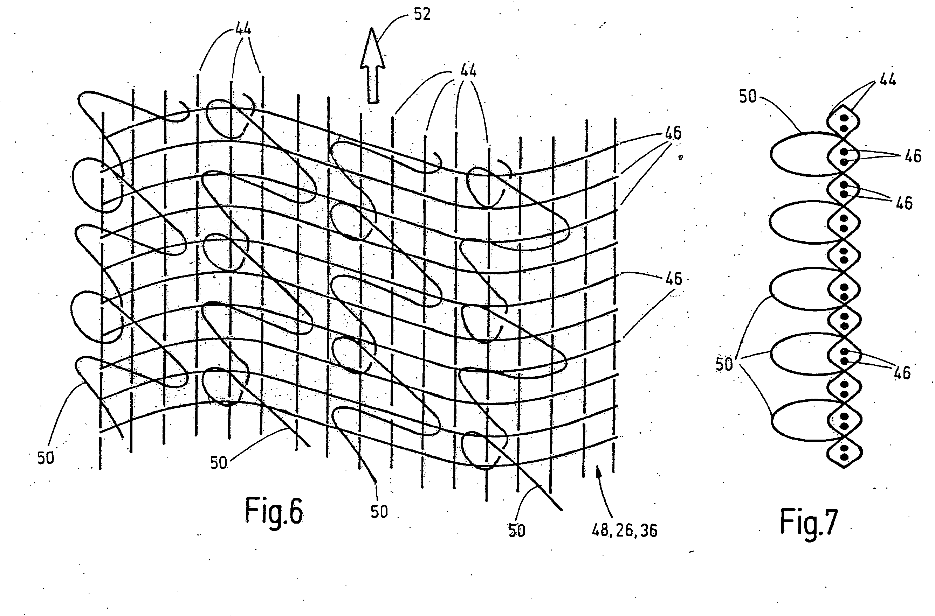

Die in Fig.3 dargestellten beiden Haftverschlußteile 30,32 lassen sich beispielsweise dadurch ausgestalten, dass man in eine plattenartige Trägerstruktur und mithin in die Trägerlage 26 stielartige Festlegeteile von der Rückseite her in hierfür vorgesehene Bohrungen einschießt, die in der Art eines krampenförmigen oder U-förmigen Festlegeelementes ausgebildet sind. Zur Bildung der pilzkopfartigen Verschlußelemente 28 und 34 werden dann die freien, aus der Trägerlage 26 vorstehenden Stielenden der stielartigen Festlegeelemente wärmebehandelt und/oder mechanisch umgeformt und derart die charakteristische Kopfform erzielt. Auch können einzelne Stielelemente über eine aus der Computertechnik bekannte Beschickungsmaschine von der jeweils freien Stirnseite in entsprechende Ausnehmungen (Bohrungen) in der jeweiligen Trägerlage 26,36 in diese eingesetzt werden, wobei die dahingehende Verbindung wiederum über einen entsprechenden Klebstoffauftrag erfolgen kann. Die pilzkopfartigen Verdickungen am freien Ende des jeweiligen Stengelteils erreicht man dann wiederum über ein bevorzugtes Wärmebehandlungs- oder mechanisches Umformverfahren. Ein bevorzugtes Verfahren zum Erhalt des entsprechenden Haftverschlußteils 30 und/oder 32 gibt jedoch die Ausführungsform nach den Fig.6 und 7 wieder.

Die Fig.6 zeigt ausschnittsweise eine Draufsicht auf ein flächenförmiges Haftverschlußteil 30 bzw. 32. Das Haftverschlußteil 30,32 läßt sich innerhalb der Bildebene sowohl in der einen wie auch in der anderen Bildrichtung beliebig verlängern und die geometrischen Abmessungen des Flächengebildes sind abhängig von den Vorgaben der Webeinrichtung, auf der das Haftverschlußteil 30,32 gefertigt wird. Das jeweilige Haftverschlußteil 30,32 besteht bei der vorliegenden Ausführungsform aus Kettfäden 44 und Schußfäden 46, die in Queranordnung miteinander verwebt das Grundgewebe 48 für das Haftverschlußteil 30,32 bilden. Das dahingehende Grundgewebe 48 bildet dann insoweit die jeweilige Trägerlage 26 bzw. 36 aus. Des weiteren ist das Grundgewebe 48 mit sog. Funktionsfäden 50 in der Art von Polfäden ausgebildet. Der jeweilige Funktionsfaden 50 bildet dann für das flächenförmige Haftverschlußteil später die einzelnen pilzkopfartigen Verschlußelemente 28,34 aus. Um die pilzkopfartigen Verschlußelemente 28,34 zu erhalten, sind gemäß Darstellung nach der Fig.7 dann die Polfäden 50 an ihrem oberen Bogen jeweils aufzutrennen und durch entsprechende Erwärmung formen sich die freien Stengelenden zu den gewünschten pilzförmigen Verschlußelementen 28,34 um. Dergestalt entstehen dann die in den Fig.3 bis 5 aufgezeigten Verschlußelemente.

Des weiteren ist in Blickrichtung auf die Fig.6 gesehen auf ihrer Oberseite mit einem Pfeil 52 die Produktionsrichtung für das jeweilige Haftverschlußteil 30,32 wiedergegeben. Bei der gezeigten Anordnung nach der Fig.6 sind die jeweiligen Schußfäden 46 in der Art einer Sinus- oder Kosinuswelle bogenförmig ausgebildet und an den Kreuzungsstellen zwischen Kettfäden 44 und Schußfäden 46 verlaufen die Kettfäden 44 parallel zur Produktionsrichtung 52 sowie parallel zueinander in geradliniger Anordnung. Anstelle der Sinus- oder Kosinuswelle können aber auch die Schußfäden 46 in geradliniger Form angeordnet sein, was die Produktion erleichtern hilft; allein mit der Wellen- oder Bogenform ist die in einer Richtung verlaufende lineare Orientierung an Verschlußelementen 28,34 des Haftverschlusses vermieden und eine bogenförmige, sinusartige Anordnung bringt einen definierten Widerstand der Außer-Eingriff-Bewegung der korrespondierenden Verschlußelemente 28,34 entgegen, so dass dergestalt die Haltekräfte im wesentlichen konstant und derart auch berechenbar sind.

Aus dem derart hergestellten Flächenverbund lassen sich die einzelnen Verschlußteile 30,32 ausschneiden oder das Webverfahren ist derart ausgelegt, dass gleich die benötigte quadratische Grundform erreicht ist. Anstelle des aufgezeigten Webverfahrens kann der vorgestellte Verschluß auch in gestrickter Form vorliegen.

## Patentansprüche

1. Befestigungssystem zum wieder lösbaren Anbringen von Abdeckbauteilen (10), wie Paneelen an Drittbauteilen (12), wie Karosseriebauteilen, mit mindestens einem Distanzhalter (20), der an seiner einen Seite mittels eines ersten Befestigungsmittels (22) an dem Abdeckbauteil (10) festlegbar ist und der auf seiner gegenüberliegenden Seite mit einem Haftverschlußteil (30) mit Verschlußelementen (28) versehen ist, das mit einem korrespondierenden Haftverschlußteil (32) mit Verschlußelementen (34) wieder lösbar in Eingriff bringbar ist, das auf seiner den Verschlußelementen (28,34) abgewandten Seite mittels eines weiteren Befestigungsmittels (38) an dem Drittbauteil (12) festlegbar ist, wobei der Distanzhalter (20) aus einem Rahmenteil besteht, dessen Bauhöhe zum Ausgleich von unterschiedlichen Einbaumaßen an den miteinander zu verbindenden Bauteilen (10,12) vorgebbar ist, und wobei das Rahmenteil eine rechteckförmige Kastenform hat mit einer Rahmenvertiefung (24), **dadurch gekennzeichnet, dass** das eine Haftverschlußteil (30) eine die Verschlußelemente (28) aufweisende Trägerlage (26) umfaßt, die bündig in die Rahmenvertiefung (24) des Distanzhalters (20) aufnehmbar und dort mittels eines Klebstoffes unverlierbar festlegbar ist.

2. Befestigungssystem nach Anspruch 1, **dadurch gekennzeichnet, dass** der Distanzhalter (20) auf seiner den Verschlußelementen (28) abgewandten Seite als Befestigungsmittel (22) eine Klebstoffschicht trägt.

3. Befestigungssystem nach Anspruch 1 oder 2, **dadurch gekennzeichnet, dass** das Rahmenteil des Distanzhalters (20) in der Art eines Hohlprofils ausgebildet ist, das über innere und/oder äußere Stegwände (42) ausgesteift ist.

4. Befestigungssystem nach einem der Ansprüche 1 bis 3, **dadurch gekennzeichnet, dass** die jeweiligen Verschlußelemente (28,34) von erstem Haftverschlußteil (30) und korrespondierendem Haftverschlußteil (32) pilzkopfartig ausgebildet sind, und dass die Pilzköpfe des einen Haftverschlußteils (30) in die von den Pilzköpfen des korrespondierenden Haftverschlußteils (32) gebildeten Abstände wieder lösbar eingreifen.

5. Befestigungssystem nach einem der Ansprüche 1 bis 4, **dadurch gekennzeichnet, dass** das Befestigungsmittel (38) des korrespondierenden Haftverschlußteils (32) aus einer Klebstoffschicht gebildet ist, die von einer entfernbaren Schutzfolie (40) abdeckt ist, die zum Festlegen des korrespondierenden Haftverschlußteils (32) am Drittbauteil (12) abgezogen ist.

6. Befestigungssystem nach einem der Ansprüche 1 bis 5, **dadurch gekennzeichnet, dass** die einzelnen Distanzhalter (20) in Funktionsgruppen unterteilt zur dahingehenden Kenntlichmachung eingefärbt sind.

7. Abdeckbauteil (10) mit einem Befestigungssystem gemäß einem der Ansprüche 1 bis 6, **dadurch gekennzeichnet, dass** mindestens ein fertiger Verbund, bestehend aus einem Distanzhalter (20), miteinander in Eingriff befindlicher Verschlußelemente (28,34) sowie dem mit einer Schutzfolie (40) abgedeckten weiteren Befestigungsmittel (38) in Form eines Klebstoffs mittels des ersten Befestigungsmittels (22) an dem Abdeckbauteil (10) festlegbar ist, und dass nach Abziehen der Schutzfolie (40) das Abdeckbauteil (10) mit dem aufgeklebten Verbund in einer vorgebbaren Position mit dem Drittbauteil (12) klebend verbunden ist.

## Claims

1. A fastening system for re-releaseably attaching covering components (10), such as panels, to third components (12), such as body components, comprising at least one spacer (20) which can be secured to the covering component (10) on one of its sides by means of a first fastening means (22), and which is provided on its opposite side with an adhesive closure part (30) with closure elements (28) that can be re-releaseably engaged with a corresponding adhesive closure part (32) with closure elements (34) that can be secured on its side facing away from the closure elements (28, 34) by means of a further fastening means (38) to the third component (12), the spacer (20) comprising a frame part, the height of which can be predetermined in order to compensate for different installation dimensions of the components (10, 12) to be connected to one another, and the frame part having the shape of a rectangular box with a frame indentation (24), **characterised in that** the one adhesive closure part (30) has a support layer (26) that has the closure elements (28) and which can be received, flush, in the frame indentation (24) of the spacer (20) and can be secured undetachably here by means of an adhesive.

2. The fastening system according to Claim 1, **characterised in that** the spacer (20) supports an adhesive layer on its side facing away from the closure elements (28) as fastening means (22).

3. The fastening system according to Claim 1 or 2, **characterised in that** the frame part of the spacer (20) is made in the manner of a hollow profile that is reinforced by inner and/or outer partition walls (42).

4. The fastening system according to any of Claims 1 to 3, **characterised in that** the respective closure elements (28, 34) of the first adhesive closure part (30) and the corresponding adhesive closure part (32) are made in the shape of mushrooms and that the mushroom shapes of the one adhesive closure part (30) engage re-releaseably in the spaces formed by the mushroom shapes of the corresponding adhesive closure part (32).

5. The fastening system according to any of Claims 1 to 4, **characterised in that** the fastening means (38) of the corresponding adhesive closure part (32) is formed from an adhesive layer that is covered by a removable protective film (40) which is removed to secure the corresponding adhesive closure part (32) to the third component (12).

6. The fastening system according to any of Claims 1 to 5, **characterised in that** the individual spacers (20), sub-divided into functional groups, are coloured to identify them as such.

7. A covering component (10) comprising a fastening system according to any of Claims 1 to 6, **characterised in that** at least one prefabricated composite part consisting of a spacer (20), closure elements (28, 34) engaged with one another and the further fastening means (38) in the form of an adhesive covered with a protective film (40) can be secured to the covering component (10) by means of the first fastening means (22) and that after removing the protective film (40) the covering component (10) with the stuck on composite is adhesively connected to the third component (12) in a predeterminable position.

## Revendications

1. Système de fixation pour le montage amovible à nouveau d'éléments (10) de recouvrement, comme des panneaux, sur des éléments (12) tiers, comme des éléments de carrosserie, comprenant au moins un intercalaire (20), qui, sur l'un de ses côtés, peut être fixé à l'élément (10) de recouvrement à l'aide d'un premier moyen (22) de fixation et qui est pourvu, sur son côté opposé, d'une partie (30) de fermeture autoagrippante ayant des éléments (28) de fermeture, qui peut être mise en prise de manière redétachable avec une partie (32) correspondante de fermeture autoagrippante ayant des éléments (34) de fermeture, partie qui, sur son côté éloigné des éléments (28, 34) de fermeture, peut être fixée sur l'élément (12) tiers à l'aide d'un autre moyen (38) de fixation, l'intercalaire (20) étant constitué d'une partie formant cadre, dont la hauteur de construction peut être prescrite pour compenser des dimensions de montage différentes sur les éléments (10, 12) à relier l'un à l'autre et dans lequel la partie formant cadre a une forme rectangulaire en caisson ayant une cavité (24) de cadre, **caractérisé en ce que** l'une des parties (30) de fermeture autoagrippante comprend une couche (26) support, qui a les éléments (28) de fermeture, qui peut être reçue à affleurement dans la cavité (24) de cadre de l'intercalaire (20) et qui peut y être fixée de manière imperdable au moyen d'une colle.

2. Système de fixation suivant la revendication 1, **caractérisé en ce que** l'intercalaire (20) porte une couche de colle comme moyen (22) de fixation du côté éloigné des éléments (28) de fermeture.

3. Système de fixation suivant la revendication 1 ou 2, **caractérisé en ce que** la partie formant cadre de l'intercalaire (20) est constituée à la manière d'un profilé creux, qui est rigidifié par des parois (42) de nervure intérieures et/ou extérieures.

4. Système de fixation suivant l'une des revendications 1 à 3, **caractérisé en ce que** les éléments (28, 34) de fermeture respectifs d'une première partie (30) de fermeture autoagrippante et d'une partie (32) correspondante de fermeture autoagrippante sont de type en tête de champignon et **en ce que** les têtes de champignon de l'une des parties (30) de fermeture autoagrippante pénètrent d'une manière à nouveau détachable dans les intervalles formés par les têtes de champignon de la partie (32) correspondante de fermeture autoagrippante.

5. Système de fixation suivant l'une des revendications 1 à 4, **caractérisé en ce que** le moyen (38) de fixation de la partie (32) correspondante de fermeture autoagrippante est formé d'une couche de colle, qui est recouverte d'une feuille (40) de protection qui peut être retirée et qui, pour la fixation de la partie (32) correspondante de fermeture autoagrippante, est tirée sur l'élément (12) tiers.

6. Système de fixation suivant l'une des revendications 1 à 5, **caractérisé en ce que** les diverses intercalaires (20) sont, en étant subdivisées en groupes fonctionnels, colorées pour les rendre reconnaissables.

7. Elément (10) de recouvrement ayant un système de fixation suivant l'une des revendications 1 à 6, **caractérisé en ce qu'**au moins un composite fini, composé d'un intercalaire (20), d'éléments (28, 34) de fermeture se trouvant en prise les uns avec les autres, ainsi que de l'autre moyen (38) de fixation recouvert d'une feuille (40) de protection sous la forme d'une colle, peut être fixé à l'élément (10) de recouvrement à l'aide du premier moyen (22) de fixation et **en ce que**, après avoir retiré la feuille (40) de protection, l'élément (10) de recouvrement ayant le composite collé est relié par collage à l'élément (12) tiers en une position pouvant être prescrite.
